Europäisches Patentamt

(19) European Patent Office

Office européen des brevets

(11) Publication number: **0 036 413**
**B1**

# EUROPEAN PATENT SPECIFICATION

(45) Date of publication of patent specification: **14.03.84**

(51) Int. Cl.³: **A 01 D 39/00, B 30 B 15/30**

(21) Application number: **80900634.9**

(22) Date of filing: **02.10.79**

(86) International application number:
**PCT/US79/00827**

(87) International publication number:
**WO 81/00951 16.04.81 Gazette 81/9**

(54) **AN AGRICULTURAL BALER.**

(43) Date of publication of application:
**30.09.81 Bulletin 81/39**

(45) Publication of the grant of the patent:
**14.03.84 Bulletin 84/11**

(84) Designated Contracting States:
**DE FR GB NL SE**

(56) References cited:
**FR - E - 63 546**
**GB - A - 1 033 379**
**GB - A - 2 030 513**
**US - A - 2 862 347**
**US - A - 3 515 058**

(73) Proprietor: **MASSEY-FERGUSON-SERVICES N.V.**
**Abraham de Veerstraat 7A**
**Curaçao Netherlands Antilles (NL)**

(72) Inventor: **CRAWFORD, Alexander**
**2250 Mississauga Road**
**Mississauga, Ontario L5H 2K9 (CA)**

(74) Representative: **Jones, David Bryn**
**Patent and Trade Marks Department Massey-Ferguson**
**Stareton, near Kenilworth Warwickshire CV8 2LJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

An agricultural baler

## Technical field

The invention relates to agricultural balers and particularly to bale chamber packing fork assemblies for packing crop material in the bale chamber between the plunger, that compresses the crop material into a bale and crop material which has not been discharged from the bale chamber. In operation, the packing fork assembly must evenly distribute crop material throughout the bale chamber. If one part of the bale chamber does not receive an adequate quantity of crop material, the resulting bale will not have rectangular ends and the completed bale may tend to deform after it leaves the bale chamber.

## Background art

Many mechanisms have been used to force crop material into a bale chamber. These mechanisms have included augers, forks on rotating crankshafts with one end secured to the structure in some manner, forks attached to a chain trained around two or more sprockets, forks slidable along a track and various combinations of these mechanisms.

U.S. 3515085 discloses a bale chamber with a packer fork assembly comprising packer forks pivotally connected to the outer end of a rotating arm so as to rotate with the arm, and being guided so, as to assume different predetermined angular orientations relative to the arm as the latter relates. Further, two such packer fork assemblies are provided to cover the full length of the bale chamber and these are interconnected by a claim and sprocket drive mechanisms.

## Disclosure of the invention

An object of the present invention is to provide a baler with a packer fork assembly in which the packer forks move in an elliptical path so that they can operate over a substantial portion of the length of the bale chamber.

An agricultural baler according to the invention comprises a bale chamber, a crop material inlet in one wall of the bale chamber, a bale outlet at the rear of the bale chamber, a plunger inside the bale chamber, plunger drive means connected to the plunger for reciprocating the plunger back and forth in the bale chamber, a feeder chamber attached to one side of the bale chamber adjacent the crop material inlet, a pick up assembly attached to the feeder chamber operable to pick crop material from the ground and feed it into the feeder chamber, a packer fork assembly and a packer fork drive attached to the feeder chamber for feeding crop material from the feeder chamber through the crop material inlet in one wall of the bale chamber and into the bale chamber, the packer fork drive including a shaft support, a first shaft rotatably journaled in the shaft support for rotation about a generally horizontal axis, a first arm attached to the first shaft, a second shaft attached to the first arm at a point spaced from the generally horizontal axis of rotation of the first shaft, a second support which is attached to the second shaft so as to be rotatable relative to the first arm and which is connected to the packer fork assembly, characterised in that said packer fork drive further comprises a first sprocket secured to the shaft support and concentric with the first shaft, a second sprocket secured to the second support and concentric with the second shaft, and an endless flexible drive member trained around the first and second sprockets so that rotation of the first arm rotates the second support and thereby rotates a second arm attached to the second support and which is longer than the first arm so that its outer end moves both horizontally and vertically.

The packer fork drive of the invention serves as an epicyclic drive that imparts an elliptical movement to the packer forks. Preferably, the first sprocket has twice the number of teeth of the second sprocket so that the second support makes one revolution about the axis of the second shaft while the first arm makes one revolution about the axis of the first shaft.

## Brief description of the drawing

Figure 1 is a plan view to reduced scale of an agricultural baler employing Applicant's packer fork drive and packer fork assembly;

Figure 2 is a sectional view of the packer fork drive assembly taken along lines 2—2 of Figure 1 with parts broken away to clearly disclose the structure;

Figure 3 is a sectional view taken on the line 3—3 of Figure 2;

Figure 4 is a sectional view of the packer fork drive taken on the line 4—4 of Figure 2;

Figure 5 is a front elevation of the packer fork assembly to reduced scale with parts broken away;

Figure 6 is an enlarged section taken on the line 6—6 of Figure 5;

Figure 7 is an enlarged sectional view taken on the line 7—7 of Figure 5;

Figure 8 is an enlarged sectional view taken on the line 8—8 of Figure 5;

Figure 9 is an enlarged sectional view taken on the line 9—9 of Figure 5;

Figure 10 is an enlarged sectional view taken on the line 10—10 of Figure 5;

Figure 11 is a front elevation of the packer fork assembly to reduced scale showing the path of movement of the packer forks;

Figure 12 is an enlarged elevation with portions broken away showing the attachment of the packer forks adjacent the bale chamber to a packer fork arm; and

Figure 13 is a sectional view taken along lines 13—13 of Figure 12.

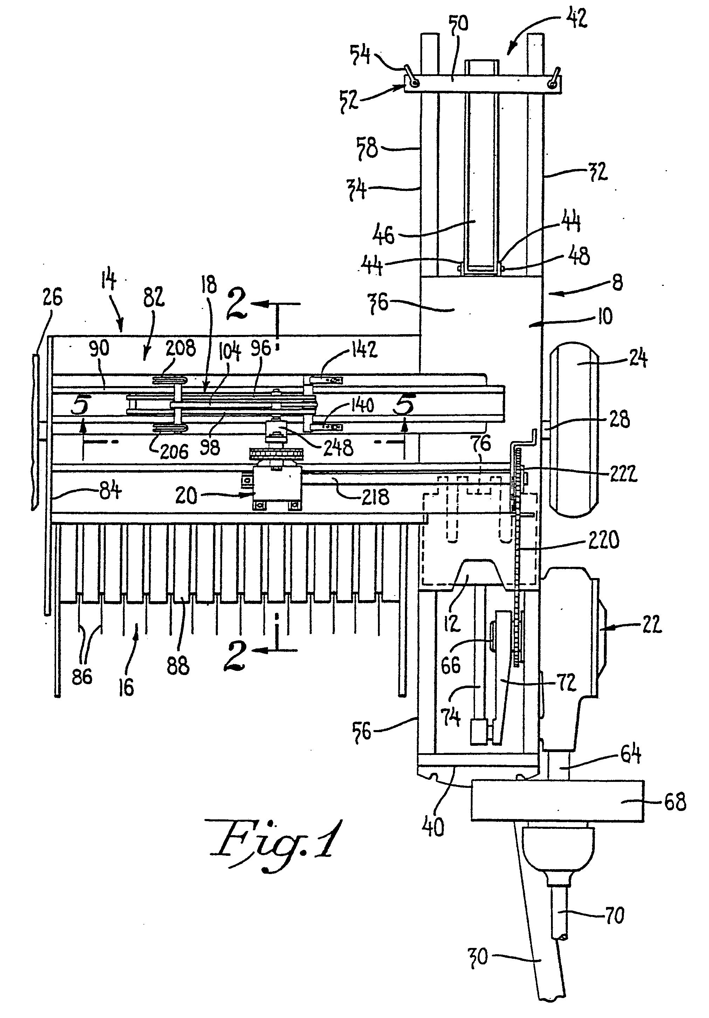

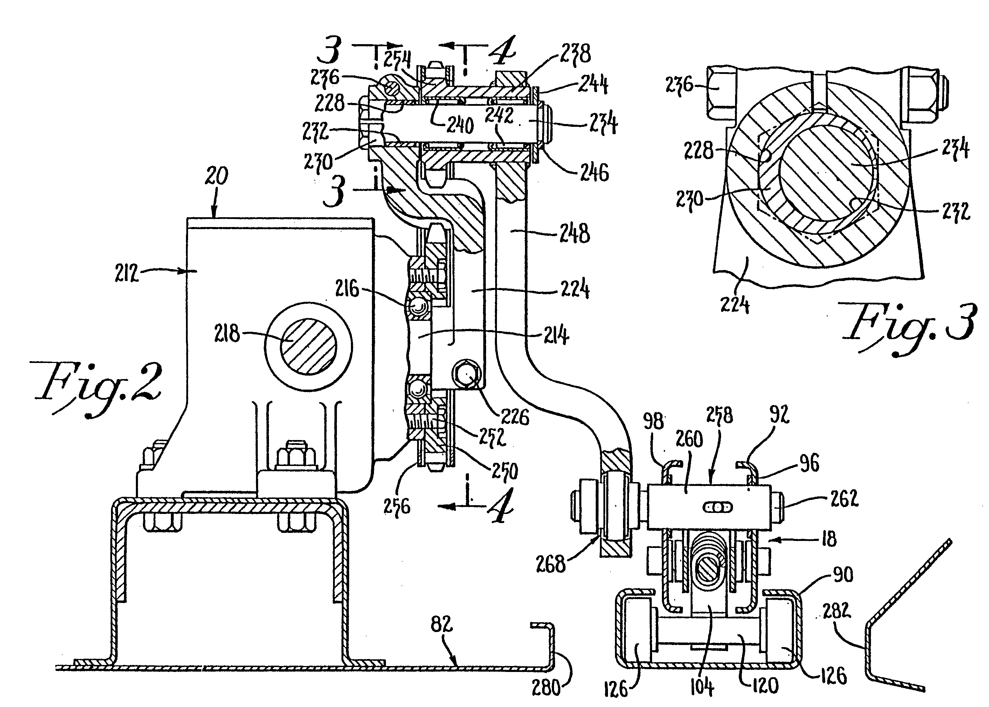

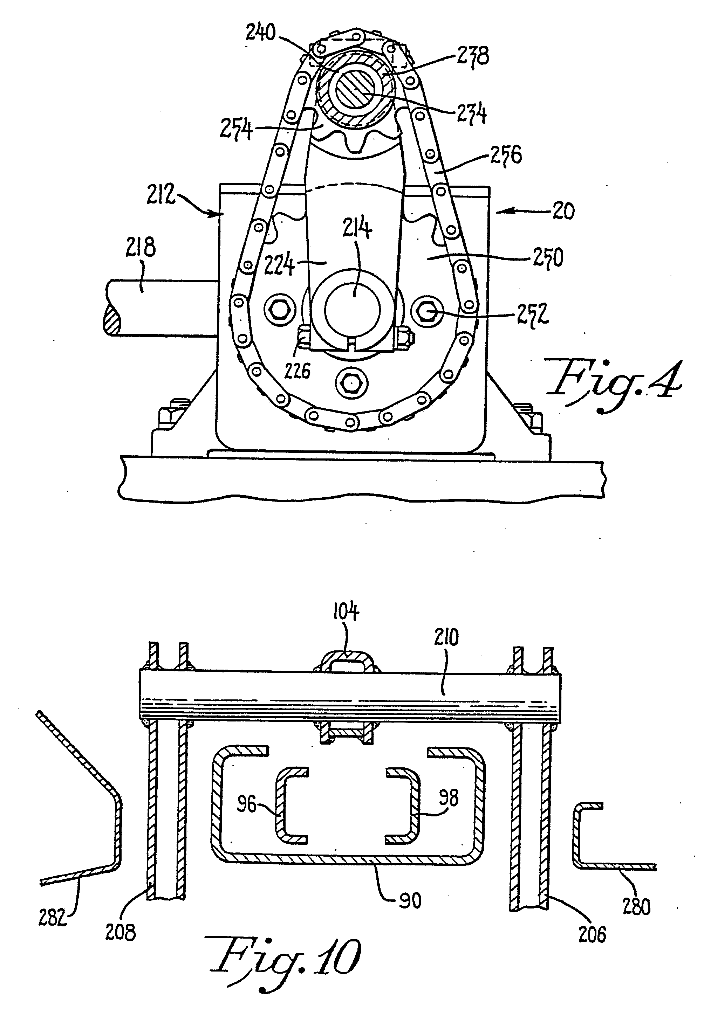

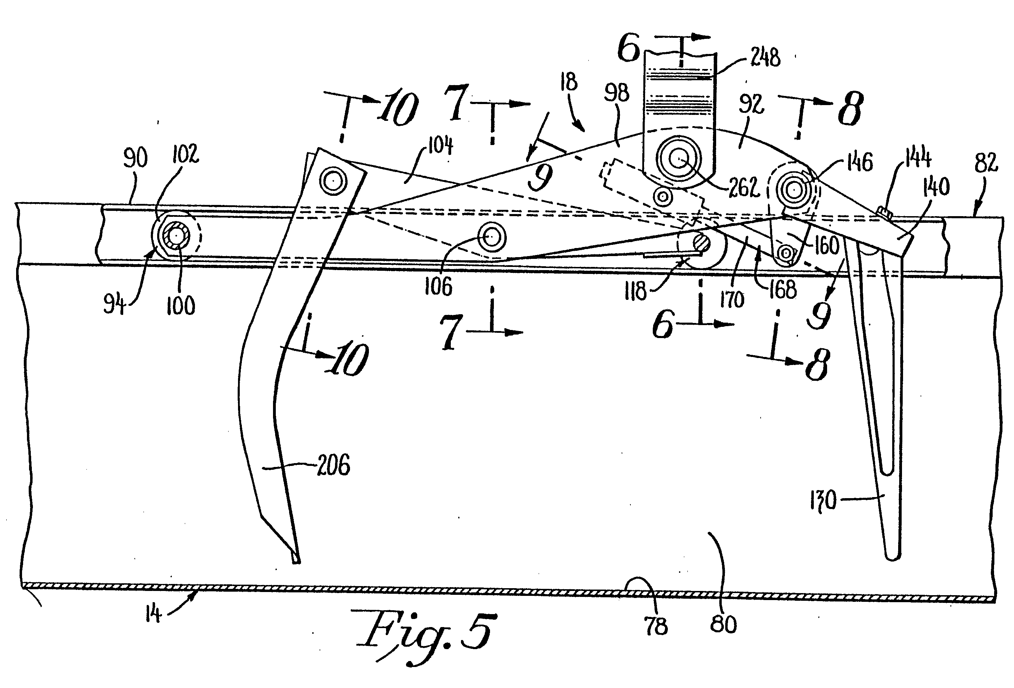

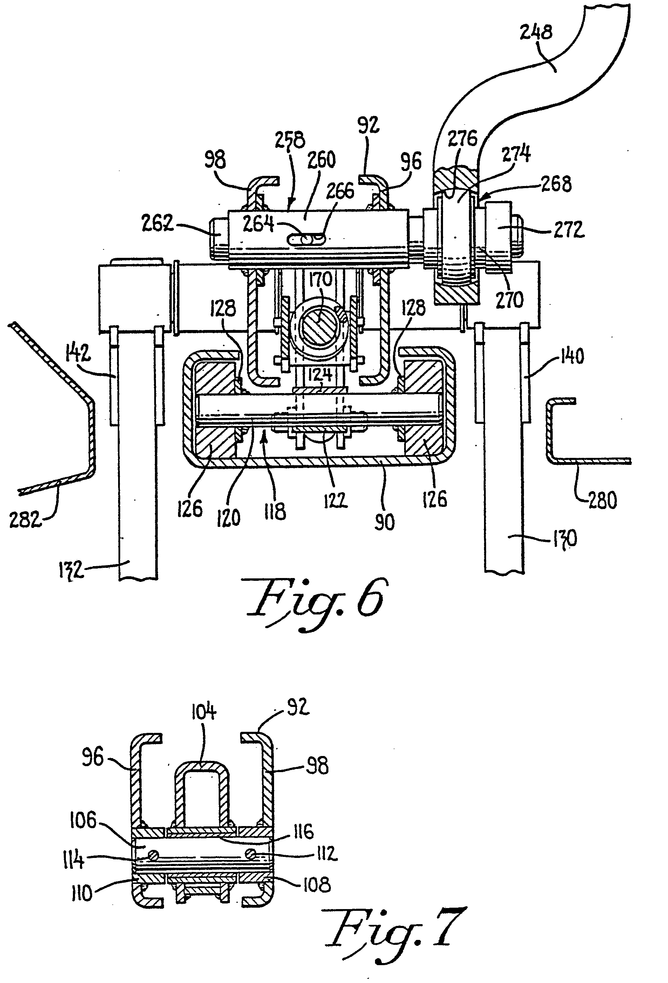

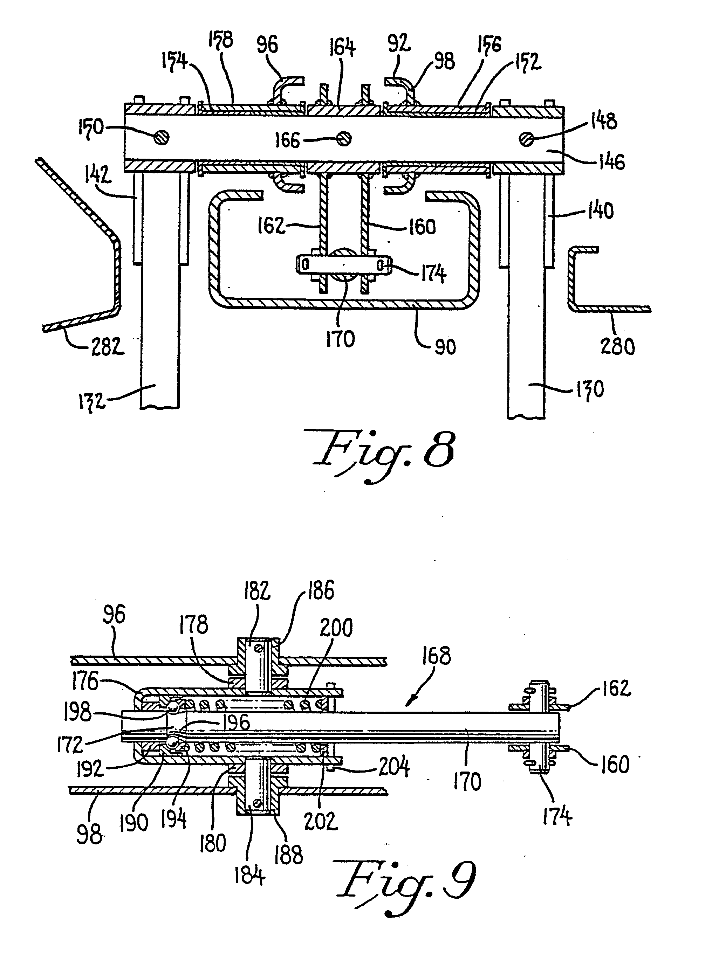

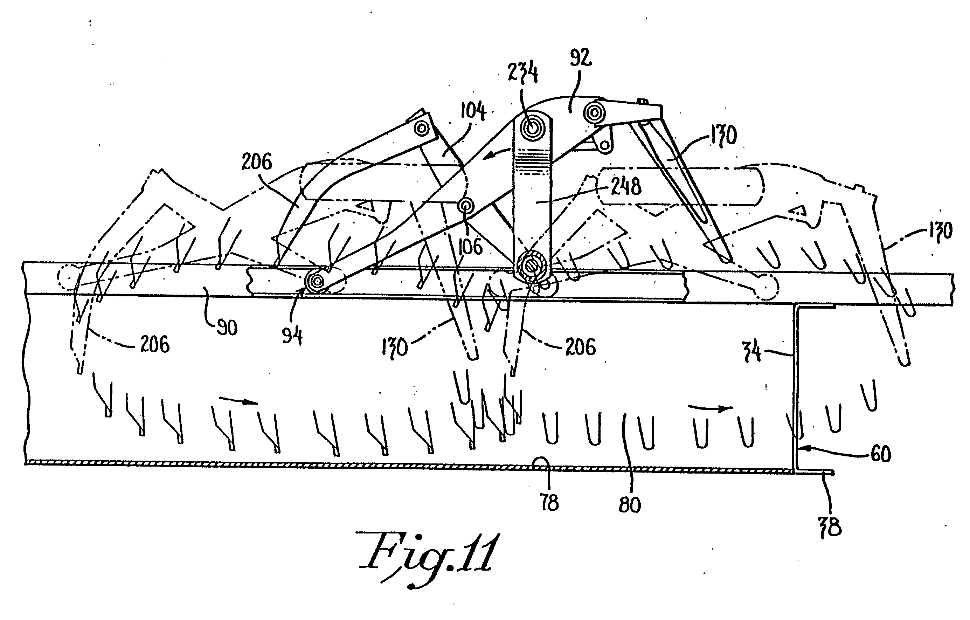

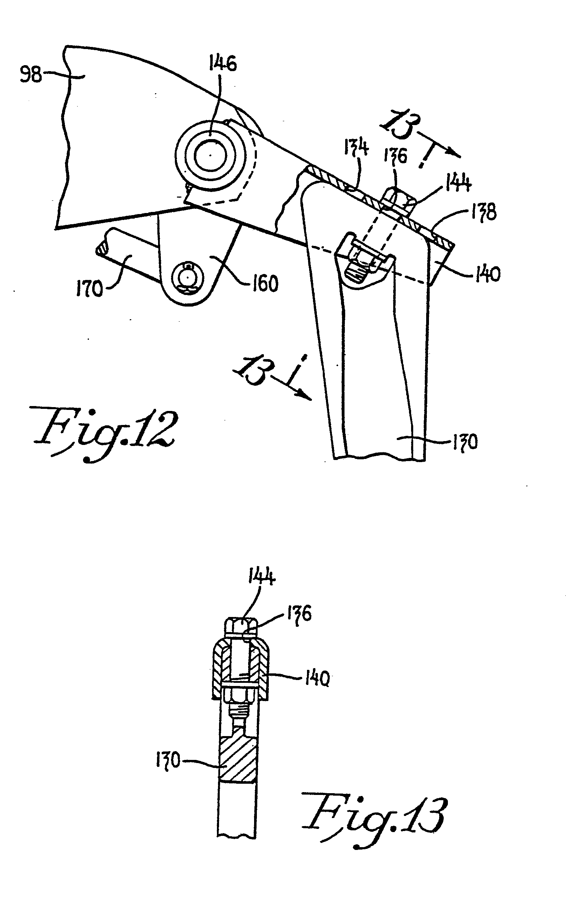

Best mode for carrying out the invention

The agricultural baler 8 as disclosed in the application includes a bale chamber 10, a plunger 12, a feeder chamber 14, a pick-up assembly 16, a packer fork assembly 18, a packer fork drive 20, and a plunger drive 22. The baler 8 is supported on a pair of ground engaging wheels 24, 26 rotatably journaled on an axle 28. A draw bar 30 is attached to the forward portion of the bale chamber 10. The forward end of the draw bar 30 (not shown) is adapted to be connected to a draft vehicle such as a tractor.

The bale chamber 10 includes a pair of side walls 32, 34, a top wall 36 and a bottom wall 38. The bottom wall 38 is partially shown in Figure 11. A front end plate 40 is attached to the forward ends of the side walls 32, 34. The rear portion of the bale chamber 10 is open and forms a bale outlet 42.

A pair of brackets 44 are rigidly secured to the top wall 36. A similar pair of brackets (not shown) directly below the brackets 44 are rigidly secured to the bottom wall 38. An upper tension bar 46 is pivotally secured to the pair of brackets 44 by a pin 48 and extends rearwardly from the pair of brackets 44. A lower tension bar (not shown) is pivotally secured to the pair of brackets 44 rigidly secured to the bottom wall 38. The lower tension bar is substantially identical to upper tension bar 46 and directly below the upper tension bar 46.

A cross bar 50 is attached to the rear portion of the upper tension bar 46. A lower cross bar (not shown) is attached to the rear portion of the lower tension bar. A tension assembly 52 including a wing nut 54 interconnects the ends of the cross bar. The tension assemblies 52 control the pressure exerted on a crop material bale by the lower and upper tension bars 46. The pressure exerted by the tension bars 46 controls the density of the bales formed by the baler by controlling the force required to force a bale out through the bale outlet.

The side wall 34 of the bale chamber 10 includes a forward wall portion 56 and a real wall portion 58. A space between the wall portions 56, 58 of the side wall 34 defines a crop material inlet 60.

A plunger 12 is supported on rails (not shown) inside the bale chamber 10. A plunger drive 22 is mounted on the forward portion of a sidewall 32 of the bale chamber 10. The plunger drive 22 includes a gear box with an input shaft 64 and an output shaft 66. A flywheel 68 is mounted on the input shaft 64. A drive shaft 70, the rear portion of which is shown, can be employed to connect the input shaft 64 to a tractor power take off. A crank arm 72 is secured to the plunger drive output shaft 66. A connecting rod 74 is connected to the crank arm 72 and to the plunger 12. The plunger drive 22 reciprocates the plunger 12 back and forth inside the bale chamber 10 so that the plunger face 76 moves from a position adjacent the forward edge of the crop material inlet 60 to a position to the rear of the crop material inlet 60 and then returns to the position adjacent the forward edge of the crop material inlet.

A feeder chamber 14 is secured to the bale chamber 10 and extends generally outwardly from the crop material inlet 60. The feeder chamber 14 includes a floor 78, a back wall 80, a top wall assembly 82, and one feed chamber end wall 84. The front portion of the feeder chamber 14 is open.

A crop material pick-up assembly 16 is mounted in front of the feeder chamber 14. The pick-up assembly 16 includes a plurality of fingers 86 mounted on a drum (not shown) that is rotatable about a generally horizontal axis. Stripper plates 88 are mounted around the drum so that the fingers move along slots between adjacent stripper plates 88. The drum is driven by a drive means (not shown) so that the fingers 86 gather loose crop material from the ground, slide it along the stripper plates 88 and onto the floor 78 of the feeder chamber 14.

A packer fork assembly 18 is mounted on top of the feeder chamber 14. The packer fork assembly 18 includes a horizontal track 90 which also forms a portion of the top wall assembly 82 of the feeder chamber 14. The primary packer fork arm 92 of the packer fork assembly 18 includes a primary packer fork guide assembly 94 mounted on one end. The primary packer fork arm 92 is constructed from two spaced apart channel members 96, 98. The primary packer fork guide assembly 94 includes a shaft 100 rigidly secured to the spaced apart channel members 96, 98 and a roller 102 rotatably journaled on each end of the shaft 100. The rollers 102 roll along the horizontal track 90.

A secondary packer fork arm 104 extends between the two spaced apart channel members 96, 98 of the primary packer fork arm 92. The primary and secondary packer fork arms 92, 104 are pivotally connected to each other by a pin 106 at a point intermediate their ends. The pin 106 is retained in the sleeves 108, 110 by retainer pins 112, 114. A bearing 116 is provided in the secondary packer fork arm 104 to permit pivotal movement of the secondary packer fork arm 104 about the axis of the pin 106.

A secondary packer fork guide assembly 118 is secured to one end of the secondary packer fork arm 104. The secondary packer fork arm guide assembly 118 includes a shaft 120 rigidly secured to the secondary packer fork arm 104 by a pair of plate members 122, 124. A roller 126 is rotatably journaled on each end of the shaft 120. The rollers 126 are held out adjacent the ends of the shaft 120 and in contact with the horizontal track 90 by collar members 128 welded to the shaft 120.

A pair of packer forks 130, 132 are each bolted in one of three holes 134, 136, 138 in channel shaped packer fork attaching arms 140, 142 by bolts 144. The channel shaped packer fork attaching arms 140, 142 are rigidly secured to an overload release shaft 146 by retainer pins 148, 150. The overload release shaft 146 is journaled in bearings 152, 154 supported in sleeves 156, 158 secured to one end of the primary packer fork arm 92. A pair of arms 160, 162 are welded to a sleeve 164 secured to the overload release shaft 146 by a pin 166 between the spaced apart channel members 96, 98. An overload release assembly 168 is provided to hold the overload release shaft 146 in a fixed working position under normal conditions.

The overload release assembly 168 includes a rod 170 with a retainer ball groove 172 near one.end and a pin 174 pivotally securing the other end between the free ends of the pair of arms 160, 162 secured to the overload release shaft 146. The end of the rod 170 with a retainer ball groove 172 passes through a spring and ball retainer housing 176. Trunions 178, 180 are secured to opposite sides of the spring and ball retainer housing 176. Spring and ball retainer housing support pins 182, 184 are rigidly secured inside sleeves 186, 188 welded to the special support channel members 96, 98 and extend into the trunions 178, 180. A stationary ball retainer 190 is mounted inside the spring and ball retainer housing 176. A spacer 192 is provided between the end wall of the spring and ball retainer housing 176 and the stationary ball retainer 190 to provide an adequate bearing surface for the rod 170. A displaceable ball retainer 194 with an angled ball contact surface 196 is forced toward the retainer balls 198 by a spring 200. The spring 200 is held in the spring and ball retainer housing 176 by an apertured plate 202 and plate retainers 204. The spring 200 forces the displaceable ball retainer 194 toward the stationary ball retainer 190. The angled ball contact surface 196 forces the retainer balls 198 into the retainer ball groove 172. When either of the packer forks 130, 132 contact an obstruction, the surfaces of the retainer ball groove 172 cam the retainer balls 198 outwardly and the displaceable ball retainer 194 moves away from the stationary ball retainer 190 compressing the spring 200 until the retainer balls 198 are out of the retainer ball groove 172 and the rod 170 can move freely into the spring and ball retainer housing 176. This allows the packer forks 130, 132 to pivot about the axis of the overload release shaft 146 and away from the obstruction.

Packer forks 206, 208 formed from u-shaped channel members are welded to a shaft 210 welded to one end of the secondary packer fork arm 104.

The packer fork drive 20 includes a shaft support 212 which supports a first shaft 214 in bearings 216. The shaft support 212 is preferably also a gear box for bevel gears (not shown) on the first shaft 214 and the input shaft 218. The input shaft 218 is driven by a chain 220 trained around a sprocket 222 on one end of the input shaft 218 and on the output shaft 66 for the plunger drive 22.

A first arm 224 is secured by a bolt 226 to the first shaft 214. The free end of the first arm 224 includes a circular bore 228 with an axis parallel to the axis of the first arm 214. A cam member 230 is rotatably mounted in the circular bore 228. The cam member 230 has an eccentric bore 232. A second shaft 234 is mounted in the eccentric bore 232. A bolt 236 is provided in the first arm 224 for locking the cam member 230 and the second shaft 234 in the desired position in the circular bore 228.

A second arm support 238 is rotatably supported on bearings 240, 242 on the second shaft 234. A washer 244 and a lock ring 246 hold the second arm support 238 on the second shaft 234. A second arm 248 is welded to the second arm support 238.

A first sprocket 250 is secured to the shaft support by bolts 252. The first sprocket 250 is concentric with the axis of rotation of the first shaft 214 but does not rotate. A second sprocket 254 is an integral part of the second arm support 238. A chain 256 is trained around the first and second sprockets 250 and 254. The tension on the chain is adjusted by loosening the bolt 236 and turning the cam member 230 with the hexagon head until the second sprocket 254 and the second shaft 234 are the desired distance from the first sprocket 250 and the first shaft 214 to obtain proper tension on the chain 256.

The free end of the second arm 248 is connected to the packer fork assembly 18 by a pivot assembly 258. The pivot assembly 258 includes a sleeve 260 welded into the primary packer fork arm 92 between the primary packer fork guide assembly 94 and the packer forks 130, 132. A shaft 262 is secured in the sleeve 260 by a pin 264. The pin 264 extends through a slot 266 in the sleeve 260 which allows the shaft 262 to move longitudinally relative to the sleeve 260 but prevents rotation of the shaft 262. A self aligning bearing 268 is recurred to one end of the shaft 262. The self aligning bearing 268 includes an inner race 270 locked to the shaft 262 by a locking collar 272 and an outer race 274 in the spherical bore 276 in the free end of the second arm 248.

In operation, the pick-up assembly feeds crop material from the ground to the feeder chamber 14. The packer forks 206, 208 on the secondary packer fork arm 104 feeds crop material from the end of the feeder chamber 14 remote from the bale chamber 10 to the mid section of the feeder chamber 14. The packer forks 130, 132 on the primary packer fork arm 92 feeds crop material from the mid section of the feeder chamber 14 into the bale chamber 10. The plunger 12 in the feeder chamber 14 compresses the crop material in the feeder chamber 14 and forces the crop material through the bale outlet. A knotter mechanism (not shown) ties twine or wire around the compressed crop material to hold it in a compressed condition after compression by the plunger 12.

The packer fork drive 20 is an epicyclic drive. The first sprocket 250 has two times the number of teeth of the second sprocket 254. This results in the second arm 248 making one 360° revolution about the axis of the second shaft 234 while the first arm 224 makes one 360° revolution about the axis of the first shaft 214.

The pivot assembly 258 would move back and forth in a straight line if the second arm 248 was the same length as the first arm 224. In order to lift the packer forks 130, 132, 206 and 208 up out of the crop material during their movement away from the bale chamber 10, the second arm 248 is longer than the first arm 224. This results in the pivot assembly 258 moving vertically as well as horizontally. By connecting the pivot assembly 258 to the primary packer fork arm 92 between the primary packer fork guide assembly 94 and the packer forks 130, 132, the vertical movement of the packer forks 130, 132 is greater than the vertical movement of the pivot assembly 258. The pivot formed by the pin 106 that connects the primary packer fork arm 92 to the secondary packer fork arm 104 is positioned so that vertical movement of the packer forks 206, 208 is substantially the same as vertical movement of the packer forks 130, 132. This structure results in the packer forks 130, 132, 206 and 208 following the near ideal paths as shown in Figure 11. The forks all move substantially horizontally over most of the feed chamber floor 78. The packer forks 130, 132 are raised as they enter the bale chamber 10 so that crop material is delivered to the far upper corner of the bale chamber 10.

The lower surface of the horizontal track 90 and the portions 280 and 282 of the top wall assembly 82 of the feeder chamber 14 cooperate to strip crop material from the packer forks 130, 132, 206 and 208 as the forks are raised at the end of each feed stroke.

## Claims

1. An agricultural baler comprising a bale chamber (10), a crop material inlet (60) in one wall of the bale chamber, a bale outlet (42) at the rear of the bale chamber, a plunger (12) inside the bale chamber, plunger drive means (22) connected to the plunger (12) for reciprocating the plunger back and forth in the bale chamber, a feeder chamber (14) attached to one side of the bale chamber adjacent the crop material inlet, a pick up assembly (16) attached to the feeder chamber (14) operable to pick crop material from the ground and feed it into the feeder chamber (14), a packer fork assembly (18) and a packer fork drive (20) attached to the feeder chamber (14) for feeding crop material from the feeder chamber through the crop material inlet in one wall of the bale chamber and into the bale chamber, the packer fork drive (20) including a shaft support (212), a first shaft (214) rotatably journaled in the shaft support for rotation about a generally horizontal axis, a first arm (224) attached to the first shaft (214), a second shaft (234) attached to the first arm (224) at a point spaced from the generally horizontal axis of rotation of the first shaft, a second support (238) which is attached to the second shaft (234) so as to be rotatable relative to the first arm (224) and which is connected to the packer fork assembly (18) characterised in that said packer fork drive further comprises a first sprocket (250) secured to the shaft support (212) and concentric with the first shaft (214), a second sprocket (254) secured to the second support (238) and concentric with the second shaft (234), and an endless flexible drive member (256) trained around the first and second sprockets so that rotation of the first arm (224) rotates the second support (238) and thereby rotates a second arm (248) attached to the second support (238) and which is longer than the first arm (224) so that its outer end moves both horizontally and vertically.

2. A baler as claimed in claim 1 in which the first sprocket (250) has twice the number of teeth as the second sprocket (254).

3. A baler as claimed in any one of the preceding claims in which the second arm (248) attached to the second support (238) is pivotally connected to the packer fork assembly (18).

4. A baler as claimed in any one of the preceding claims in which the packer fork assembly (18) includes a generally horizontal track (90), a primary packer fork arm (92), guide means (94) on one end of the primary packer fork arm and in contact with the horizontal track, and an intermediate portion (258) of the primary packer fork arm being connected to the second arm (248) by a pivot assembly.

5. A baler as claimed in claim 4 wherein packer forks (130, 132) are attached to the primary packer fork arm (92).

6. A baler as claimed in claim 4 in which the packer fork assembly (18) includes a secondary packer fork arm (104) pivotally attached to the primary packer fork arm (92) and guide means (118) on one end of the secondary packer fork arm and in contact with the generally horizontal track (90).

7. A baler as claimed in claim 6 comprising packer forks (130, 132, 206, 208) attached to the primary (130, 132) and the secondary packer fork arms (104).

## Revendications

1. Machine agricole de mise en balles comprenant une chambre à balle (10), une entrée (60) de matière récoltée dans une paroi de la chambre à balle, une sortie de balle (42) à l'arrière de la chambre à balle, un piston plongeur (12) à l'intérieur de la chambre à balle, des moyens d'entraînement (22) de piston plongeur reliés au piston plongeur (12) pour déplacer cer dernier en va-et-vient dans la chambre à balle, une chambre d'alimentation (14) fixée sur un côté de la chambre à balle de près de l'entrée de matière récoltée, un dispositif de ramassage (16) fixé à la chambre d'alimentation (14) et fonctionnant pour ramasser la matière récoltée sur le sol et l'amener dans la chambre d'alimentation (14), un dispositif (18) de fourche de chargement et un entraînement (20) de fourche de chargement fixés à la chambre d'alimentation (14) pour déplacer la matière récoltée, à partir de la chambre d'alimentation, à travers l'entrée de matière récoltée prévue dans une paroi de la chambre à balle, et l'introduire dans la chambre à balle, l'entraînement (20) de fourche de chargement comprenant un support d'arbre (212), un premier arbre (214) monté en rotation dans le support d'arbre pour tourner autour d'un axe sensiblement horizontal, un premier bras (224) fixé au premier arbre (214), un deuxième arbre (234) fixé au premier bras (224) en un point espacé de l'axe de rotation sensiblement horizontal du premier arbre, un deuxième support (238) qui est fixé au deuxième arbre (234) de façon à pouvoir tourner par rapport au premier bras (224) et qui est relié au dispositif (18) de fourche de chargement, caractérisée en ce que l'entraînement de fourche de chargement comprend un premier pignon (250) fixé au support d'arbre (212) et concentrique au premier arbre (214), un deuxième pignon (254) fixé au deuxième support (238) et concentrique au deuxième arbre (234), et un élément d'entraînement flexible sans fin (256) qui passe autour du premier pignon et du deuxième pignon, de sorte que la rotation du premier bras (224) fait tourner le deuxième support (238) et fait ainsi tourner un deuxième bras (248) fixé au deuxième support (238) et qui est plus long que le premier bras (224) de sorte que sont extrémité extérieure se déplace à la fois horizontalement et verticalement.

2. Machine de mise en balles suivant la revendication 1, dans laquelle le premier pignon (250) a un nombre de dents qui est le double de celui du deuxième pignon (254).

3. Machine de mise en balles suivant l'une quelconque des revendications précédentes, dans laquelle la deuxième bras (248) fixé au deuxième support (238) est relié de façon pivotante au dispositif (18) de fourche de chargement.

4. Machine de mise en balles suivant l'une quelconque des revendications précédentes, dans laquelle le dispositif (18) de fourche de chargement comprend un rail (90) sensiblement horizontal, un bras principal (92) de fourche de chargement, des moyens de guidage (94) montés sur une extrémité du bras principal de fourche de chargement et en contact avec le rail horizontal, et une partie intermédiaire (258) du bras principal de fourche de chargement étant reliée au deuxième bras (248) par un pivot.

5. Machine de mise en balles suivant la revendication 4, dans laquelle les fourches de chargement (130, 132) sont fixées au bras principal (92) de fourche de chargement.

6. Machine de mise en balles suivant la revendication 4, dans laquelle le dispositif (18) de fourche de chargement comprend un bras secondaire (104) de fourche de chargement, fixé de façon pivotante au bras principal (92) de fourche de chargement, et des moyens de guidage (118) montés sur une extrémité du bras secondaire de fourche de chargement et en contact avec le rail (90) sensiblement horizontal.

7. Machine de mise en balles suivant la revendication 6, comprenant des fourches de chargement (130, 132, 206, 208) fixées au bras principal (130, 132) et au bras secondaire (104) de fourche de chargement.

## Patentansprüche

1. Landwirtschaftliche Vorrichtung zum Formen von Ballen mit einer Ballenkammer (10), einem Ernteguteinlaß (60) in einer Wand der Ballenkammer, einem Ballenauslaß (42) im hinteren Teil der Ballenkammer, einem Kolben (12) innerhalb der Ballenkammer, mit dem Kolben (12) verbundene Kolbenantriebsmittel (22) zum Hin- und Herbewegen des Kolbens in der Ballenkammer, einer Zuführkammer (14) an einer Seite der Ballenkammer neben dem Ernteguteinlaß, einer an der Zuführkammer (14) befestigten Aufnahmeeinrichtung (16) zum Aufnehmen des Erntegutes vom Boden und Einführen in die Zuführkammer (14), einer Ladegabelanordnung (18) und einem an der Zuführkammer (14) befestigten Ladegabelantrieb (20) zum Fördern des Erntegutes von der Zuführkammer durch den Ernteguteinlaß in der Wand der Ballenkammer in die Ballenkammer, wobei der Ladegabelantrieb (20) einen Lagerbock (212), eine erste im Lagerbock um eine im wesentlichen horizontale Achse drehbar gelagerte Welle (214), einen ersten, an der ersten Welle (214) befestigten ersten Arm (224), eine am ersten Arm (224) von der im wesentlichen horizontalen Drehachse der ersten Welle entfernt angebrachte zweite Welle (234) und einen, die zweite Welle (234) relativ zum ersten in der Ladegabelanordnung (18) vorgesehenen Arm (224) drehbar aufnehmenden zweiten Lagerbock (238) aufweist, dadurch gekennzeichnet, daß der Ladegabelantrieb weiter ein am Lagerbock (212) konzentrisch zur ersten Welle (214) befestigtes erstes Zahnrad (250), ein am zweiten Lagerbock (238) konzentrisch zur zweiten Welle (234) befestigtes zweites Zahnrad (254) und ein endloses, flexibles, um das erste und zweite Zahnrad herumgeführtes Antriebsglied (246) aufweist, so daß eine Drehung des ersten Armes (224) und damit am zweiten Lagerbock (238) angebrachten zweiten Arm (248) dreht, der länger als der erste Arm (224) ist, so daß sich sein äußeres Ende sowohl horizontal als auch vertikal bewegt.

2. Vorrichtung nach Anspruch 1, dadurch gekennzeichnet, daß das erste Zahnrad (25) doppelt so viele Zähne aufweist wie das zweite Zahnrad (254).

3. Vorrichtung nach einem der vorausgehenden Ansprüche, dadurch gekennzeichnet, daß der am zweiten Lagerbock (238) angebrachte zweite Arm (248) drehbar mit der Ladegabelanordnung (18) verbunden ist.

4. Vorrichtung nach einem der vorausgehenden Ansprüche, dadurch gekennzeichnet, daß die Ladegabelanordnung (18) eine im wesentlichen horizontale Schiene (90), einen ersten Ladegabelarm (92), Führungsmittel (94) an einem Ende des ersten Ladegabelarmes in Berührung mit der horizontalen Schiene und einen mit dem zweiten Arm (248) mittels einer Lageranordnung verbundenen Mittelabschnitt (258) des ersten Ladegabelarmes aufweist.

5. Vorrichtung nach Anspruch 4, dadurch gekennzeichnet, daß die Ladegabeln (130, 132) am ersten Ladegabelarm (92) angebracht sind.

6. Vorrichtung nach Anspruch 4, dadurch gekennzeichnet, daß die Ladegabelanordnung (18) einen drehbar am ersten Ladegabelarm (92) angebrachten zweiten Ladegabelarm (104) und Führungsmittel (118) am Ende des zweiten Ladegabelarmes aufweist, die mit der im wesentlichen horizontalen Schiene (90) in Berührung stehen.

7. Vorrichtung nach Anspruch 6, gekennzeichnet durch am ersten (130, 132) und am zweiten Ladegabelarm (104) angebrachte Ladegabeln (130, 132, 206, 208).

*Fig.1*

*Fig.2*

*Fig.3*

0 036 413

*Fig.4*

*Fig.10*

*Fig.5*

Fig. 6

Fig. 7

*Fig. 8*

*Fig. 9*

*Fig.11*

0 036 413

Fig.12

Fig.13